# EUROPEAN PATENT APPLICATION

(11) **EP 2 213 852 A1**
(43) Date of publication of application: **04.08.2010**
(21) Application number: 08839878.9
(22) Date of filing: 09.10.2008
(51) Int. Cl.: F01N 3/02

(54) **BLACK SMOKE PURIFICATION DEVICE**

(30) Priority: 16.10.2007 JP 2007269190; 16.10.2007 JP 2007269191; 16.10.2007 JP 2007269192
(71) Applicant: Yanmar Co., Ltd., Osaka-shi, Osaka 530-0013 (JP)
(72) Inventor: MASUDA, Hiroki, Osaka-shi Osaka 530-0013 (JP)
(74) Representative: Dieckhoff, Beate
(86) International application number: PCT/JP2008/068351
(87) International publication number: WO 2009/051058

(57) **Abstract**

A black smoke purification device enabling engine performance to be retained by bringing PMs which have become giant into good contact with an oxidation catalyst. A black smoke purification device (100) comprises an inlet section (110), an installation section (120), an outlet section (130), an oxide catalyst converter (140), and a DPF (150). The oxide catalyst converter (140) includes an aggregation of cells (141) each supporting an oxide catalyst on an inner wall surface (143). The inlet-side opening area of the cell (141) is set to a size large enough for PMs (for example, soot flakes) which have emitted from an engine and have become giant to pass therethrough and set larger than the outlet-side opening area of the cell (141).

## Description

### Technical Field

The present invention relates to a black smoke purification device.

### Background Art

PM (Particulate Matter) discharged from a diesel engine (hereinafter, referred to as "engine") is constituted by soot whose main component is carbon, SOF (Soluble Organic Fraction) which is components of fuel having not burnt or lubrication oil, and the like.
The SOF is vapor at high temperature. However, when the temperature decreases, the SOF is liquefied and makes soot adhere to each other. The soot tends to be discharged from the engine is adhered to each other by the SOF and enlarged, and then discharged.

An art for oxidation removal of enlarged soot such as the above mentioned is disclosed in the Japanese Patent Laid Open Gazette 2002-276332 for example.
A black smoke purification device disclosed in the Japanese Patent Laid Open Gazette 2002-276332 is provided therein with an oxidation catalyst converter having cells supporting an oxidation catalyst, and the density of the cells is increased from the upstream side to the downstream side. Accordingly, by diffusion of the PM in the exhaust gas, the PM touches the oxidation catalyst so that the SOF is oxidized in the cell at the upstream side and the soot is separated from the SOF. The separated soot is finely divided and oxidized in the cell at the downstream side so as to purify the exhaust gas goodly.

Generally, soot discharged from an engine sticks to an exhaust pipe between a black smoke purification device and the engine. The soot is adhered by SOF similarly discharged from the engine and is accumulated, thereby becoming larger than that included in exhaust gas. Subsequently, the accumulated soot is exfoliated by vibration of the engine or the like and becomes a "soot exfoliation piece", and then flows toward the black smoke purification device with the exhaust gas.
Since the soot exfoliation piece is larger than the soot in the exhaust gas and is larger than inlet area of a cell, the soot exfoliation piece cannot flow into the cell and blocks the inlet. Therefore, the soot exfoliation piece cannot touch an oxidation catalyst, whereby good purification of the exhaust gas requires a lot of time.
The blocking of the inlet of the cell by the soot exfoliation piece reduces the opening area of the whole oxidation catalyst converter so as to cause increase of exhaust pressure, thereby worsening the engine performance.

### Disclosure of Invention

### Problems to Be Solved by the Invention

The purpose of the invention is to provide a black smoke purification device enabling engine performance to be retained by making enlarged PM touch goodly an oxidation catalyst.

### Means for Solving the Problems

a black smoke purification device according to the present invention, which comprises an oxide catalyst converter having aggregate of cells each of which has an oxide catalyst supported on a wall surface of the cell, wherein PM discharged from an engine is purified by the oxide catalyst, is **characterized in that** inlet opening area of each of the cells is set large enough for the PM which is discharged from the engine and enlarged to pass therethrough, and is set larger than outlet opening area of the cell.

Accordingly, the enlarged PM such as a soot exfoliation piece can flow into the cell so as to be finely divided and oxidized by the oxidation catalyst supported on the wall surface of the cell.

With regard to the first mode according to the present invention, the oxide catalyst converter has a main body part, a first part provided at an upstream side of the main body part and having cells with larger upstream opening area than cells of the main body part, and a second part provided at an upstream side of the first part and having cells with larger upstream opening area than the cells of the main body part, and the cells of the first part and the second part are arranged alternately.
Accordingly, when the enlarged PM flows into the oxidation catalyst converter, the PM collides with the end surface of the cell of the first part so as to become easy to touch the inner wall surface of the cell.

With regard to the second mode according to the present invention, a notch is provided on side ends of upstream opening parts of a plurality of the cells so as to form one upstream opening by the cells as a group.
Accordingly, by an easy method of processing the inlet of the conventional oxidation catalyst converter, the cell can be realized that the enlarged PM can flow into the oxidation catalyst converter goodly.

Preferably, the upstream opening part formed by the notch is quadrangular pyramid-like shaped.

Accordingly, the notch can be formed easily.

Preferably, the upstream opening part formed by the notch is conical shaped. Accordingly, the notch can be formed easily.

With regard to the third mode according to the present invention, the oxide catalyst converter has a main body part and a front part provided at an upstream side of the main body part, an exhaust gas passage which is a space in each of cells of the front part is tapered from an upstream side to a downstream side, and upstream opening area of each of the cells of the front part is larger than upstream opening area of each of cells of the main body part.
Accordingly, the touching area of the PM with the oxidation catalyst converter is increased gradually toward the downstream side.

Preferably, sectional shape of the exhaust gas passage is square when viewed along a direction perpendicular to flow direction of exhaust gas in the exhaust gas passage.

Accordingly, the cell can be formed easily and the tapered part can be formed easily.

Preferably, a communication hole communicating the exhaust gas passage of one of the cells with the exhaust gas passage of another cell is provided in the front part.
Accordingly, even if the enlarged PM larger than the upstream opening flows into the oxidation catalyst converter and blocks the upstream opening of the cell, the exhaust gas flows from another cell through the communication hole into the exhaust gas passage of the blocked cell, whereby the exhaust gas is sent to the main body part uniformly so as to prevent oxidization work of the oxidation catalyst from being reduced.

Preferably, a space part is provided between the main body part and the front part. Accordingly, even if the upstream openings or communication holes of a part of the cells are blocked, the exhaust gas after passing through the front part is dispersed in the space part and then supplied to the oxidation catalyst of the main body part substantially uniformly so as to prevent oxidization work of the oxidation catalyst from being reduced.

### Effect of the Invention

According to the black smoke purification device of the invention, black smoke is purified goodly and engine performance is retained by making enlarged PM touch goodly an oxidation catalyst.

### Brief Description of Drawings

[Fig. 1] It is a schematic view of a first embodiment of a black smoke purification device according to the present invention.
[Fig. 2] It is a drawing of oxide catalyst converter. (A) is a side view, and (B) is a sectional plan view.
[Fig. 3] It is a partial deal perspective view of the oxide catalyst converter shown in Fig. 2.
[Fig. 4] It is a schematic view of a second embodiment of a black smoke purification device according to the present invention.
[Fig. 5] It is a drawing of oxide catalyst converter. (A) is a side view, and (B) is a sectional plan view.
[Fig. 6] It is a partial deal perspective view of the oxide catalyst converter shown in Fig. 5.
[Fig. 7] It is a partial deal perspective view of another embodiment of the oxide catalyst converter shown in Fig. 5.
[Fig. 8] It is a schematic view of a third embodiment of a black smoke purification device according to the present invention.
[Fig. 9] It is a drawing of oxide catalyst converter. (A) is a side view, and (B) is a sectional plan view.
[Fig. 10] It is a partial deal perspective view of the oxide catalyst converter shown in Fig. 9.

### The Best Mode for Carrying out the Invention

### [First Embodiment]

Explanation will be given on a diesel engine black smoke purification device (hereinafter, referred to as "black smoke purification device") 100 which is a first embodiment of a black smoke purification device according to the present invention. Hereinafter, an upstream side of flow direction of exhaust gas 10 is referred to as a front side and a downstream side thereof is referred to as a rear side, and upper, lower, left and right sides are determined on a plane perpendicular to the longitudinal direction.

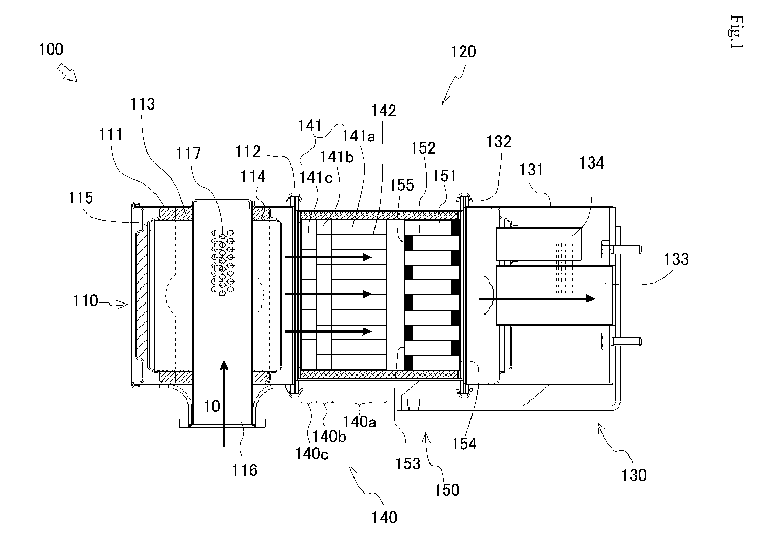

As shown in Fig. 1, the black smoke purification device 100 has an inlet section 110, an installation section 120, an outlet section 130, an oxide catalyst converter 140 and a particulate filter (hereinafter, referred to as "DPF") 150.
The exhaust gas 10 discharged from an engine is introduced through the inlet section 110 into the black smoke purification device 100, and passes through the inlet section 110, the oxide catalyst converter 140 and the DPF 150 arranged in the installation section 120, and the outlet section 130 in this order. Namely, the exhaust gas 10 is purified by passing through the black smoke purification device 100 and then discharged.

The inlet section 110 and the outlet section 130 are respectively formed in housings 111 and 131. The installation section 120 is arranged between the housings 111 and 131. The oxide catalyst converter 140 is arranged at the upstream side of the installation section 120 and the DPF 150 is arranged at the downstream side thereof respectively at predetermined intervals.
Gaskets 112 and 132 attach the installation section 120 respectively to the housings 111 and 131 sealingly and detachably.

An inlet pipe 116 is arranged in the inlet section 110 so as to guide the exhaust gas 10 from the engine (not shown). The inlet pipe 116 is shaped circular-cylindrically. The inlet pipe 116 passes through the inlet section 110 substantially vertically. One of the ends of the pipe is connected through an exhaust pipe (not shown) to the engine, and the other end thereof is sealed. A large number of small holes 117 are disposed in the side wall of the inlet pipe 116. The exhaust gas 10 is introduced through the small holes 117 from the inlet pipe 116 into the inlet section 110.
A heat insulating sound absorbing material 113 is arranged in the inlet section 110, and heat insulating sound absorbing material keep plates 114 and 115 press the heat insulating sound absorbing material 113 to the inner wall of the inlet section 110. The heat insulating sound absorbing material 113 suppresses transmission of heat of the exhaust gas 10 introduced into the inlet section 110 to the housing 111, and absorbs noise of the exhaust gas 10.

The outlet section 130 is provided therein with an outlet pipe 133 which discharges the exhaust gas 10 and a resonance pipe 134 which is in parallel to the outlet pipe 133 and reduces noise of discharge of the exhaust gas 10.

As shown in Figs. 1 to 3, the oxide catalyst converter 140 has an aggregate of cells 141 and is honeycomb structure that the two adjacent cells 141 are partitioned by a partition 142. The oxide catalyst converter 140 is formed by ceramic such as cordierite or metal such as stainless steel.
Each of the cells 141 is tubular and the section thereof is square shaped. At the upper, lower, left and right sides of each of the cells 141, the four adjacent cells 141 are arranged. An oxidation catalyst such as Pt is supported on an inner wall surface 143 of the cell 141.
The sectional shape of the cell 141 on the plane perpendicular to the flow direction of the exhaust gas 10 is not limited to square of this embodiment, and may alternatively be polygonal such as triangular or hexagonal, or circular.
As the oxidation catalyst such as Pt or the like is used in this embodiment. However, the catalyst is not limited thereto and Pd, Rh or Ir may alternatively be used.

As shown in Fig. 1, the DPF 150 is a honeycomb filter having an aggregate of cells 151 partitioned by perforated partitions 152. The DPF 150 is formed by ceramic such as cordierite. The DPF 150 is a wall flow type particulate filter that sealing parts 155 are provided alternately at inlet parts 153 and outlet parts 154 of the two cells 151 arranged parallel to each other.

Each of the cells 151 is tubular and the section thereof is square shaped.

The sectional shape of the cell 151 on the plane perpendicular to the flow direction of the exhaust gas 10 is not limited to square of this embodiment, and may alternatively be polygonal such as triangular or hexagonal, or circular.

Similarly to the oxide catalyst converter 140, an oxidation catalyst such as Pt, Pd, Rh or Ir may be supported on the wall surface of each of the cell 151.

The exhaust gas 10 of the engine includes PM, and the PM includes soot and SOF adhering the soot. The exhaust gas 10 flow into each of the cells 141 of the oxide catalyst converter 140 while the soot is adhered by the SOF so as to be enlarged, and then touches the oxidation catalyst supported on the inner wall surface 143 of the cell 141. Therefore, the SOF is oxidized and burnt so that the adhesiveness of the SOF is reduced. Then, the soot is pulverized (more strictly, the oxidation catalyst reduces the adhesiveness of the SOF so that the soot is separated), whereby the soot is finely divided.
The soot flows from the oxide catalyst converter 140 into the DPF 150 and is collected on the surface of the perforated partitions 152. Then, the collected soot is oxidized and burnt by nitrogen dioxide generated by the oxide catalyst converter 140. Otherwise, in the case of supporting the oxidation catalyst on the wall surface of each of the cell 151 of the DPF 150, the collected soot is oxidized and burnt by the oxidation catalyst.

### [Oxide Catalyst Converter 140]

As shown in Figs. 1 to 3, the oxide catalyst converter 140 is constituted by a main body part 140a, a first part 140b and a second part 140c. The second part 140c, the first part 140b and the main body part 140a are arranged in this order along the flow direction of the exhaust gas 10 from the upstream side.

The aggregate of the cells 141 is constituted by an aggregate of cells 141a provided in the main body part 140a, an aggregate of cells 141b provided in the first part 140b and an aggregate of cells 141c provided in the second part 140c.

The main body part 140a has the aggregate of the cells 141a. The main body part 140a is arranged at the downstream side, that is, the outlet side of the oxide catalyst converter 140. The opening area of each of the cells 141a is set smaller than that of each of the cells 141b and 141c of the first part 140b and the second part 140c.
Each of the cells 141a is square tubular member whose lengthwise is along the flow direction of the exhaust gas 10. At the upper, lower, left and right sides of each of the cells 141a, the four adjacent cells 141a are arranged.

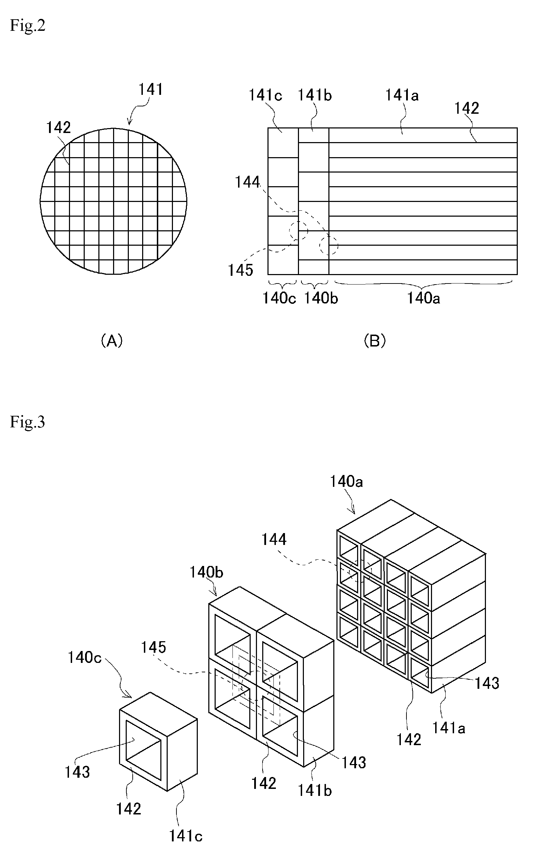

The first part 140b has the aggregate of the cells 141b. The first part 140b is arranged at the upstream side of the main body part 140a. The opening area of each of the cells 141b is set larger that of each of the cells 141a. Each of sides of the cell 141b is twice the length of that of the cell 141a, and the opening area of the cell 141b is about four times of that of the cell 141a.
Each of the cells 141b is square tubular member whose lengthwise is along the flow direction of the exhaust gas 10. At the upper, lower, left and right sides of each of the cells 141b, the four adjacent cells 141b are arranged.
The first part 140b and the main body part 140a are disposed continuously so that an alternate part 144 is formed in the upstream end surface of the partition 142 in each of the cells 141a of the main body part 140a. Namely, as shown in Fig. 3, the four cells 141a is connected to the one cell 141b. The alternate part 144 is a part of the upstream end surface of the partition 142 of the cells 141a facing the downstream opening surface of each of the cells 141b of the first part 140b. Accordingly, when soot flows from the cells 141b to the cells 141a, the soot collides with the alternate part 144 so as to be crushed.

The second part 140c has the aggregate of the cells 141c. The second part 140c is arranged at the upstream side of the first part 140b. The opening area of each of the cells 141c is set substantially similarly to that of each of the cells 141b, and the shape of the opening of the cell 141c is the same as that of the cell 141b.
Each of the cells 141c is square tubular member whose lengthwise is along the flow direction of the exhaust gas 10. At the upper, lower, left and right sides of each of the cells 141c, the four adjacent cells 141c are arranged.
As an alternate part 145 is formed in the upstream end surface of the partition 142 in each of the cells 141b of the main body part 140b, the second part 140c and the first part 140b are disposed. Namely, as shown in Fig. 3, the cells 141b and the cells 141c having similar size are arranged alternately. The alternate part 145 is a part of the upstream end surface of the partition 142 of the cells 141b facing the downstream opening surface of each of the cells 141c of the second part 140c. Accordingly, when soot flows from the cells 141c to the cells 141b, the soot collides with the alternate part 145 so as to be crushed.

The oxidation catalyst is supported on the inner wall surface 143 of each of the cells 141a, 141b and 141c.

With regard to the area of the section of the cell perpendicular to the flow direction of the exhaust gas 10 (hereinafter, referred to as "the sectional area of the cell"), the sectional area of the cell 141a is about 1/4 of the sectional area of each of the cells 141b and 141c. Namely, the sectional area of the cell 141a (the outlet opening of the cell 141) is smaller than the sectional area of the cell 141c (the inlet opening of the cell 141). Accordingly, the PM is easier to touch the oxidation catalyst on the inner wall surface 143 in the case of flowing in the cell 141a arranged at the downstream of the cell 141b rather than in the case of flowing in the cell 141b. Then, the touching area of the PM oxidized and finely divided in the oxide catalyst converter 140 with the cell 141a is secured.

Explanation will be given on the case that a soot exfoliation piece which is an example of "enlarged PM" flows into the oxide catalyst converter 140.

The soot in the exhaust gas 10 discharged from the engine adheres to the exhaust pipe connecting the engine with the black smoke purification device 100 and is accumulate, thereby being enlarged. Then, the enlarged soot is exfoliated from the exhaust pipe by vibration or the like and becomes the "soot exfoliation piece", and then flows into the oxide catalyst converter 140 (the cell 141).

In this case, since the sectional area of the cell 141c (the inlet opening area of the cell 141) is set larger than the outline of the supposed soot exfoliation piece, the soot exfoliation piece flows into the cell 141c. Namely, the opening area of the cell 141c arranged at the inlet side of the oxide catalyst converter 140 is set so large that PM discharged from the engine can pass therethrough even if the PM is enlarged and becomes the soot exfoliation piece, and is set larger than the inlet opening area of an oxide catalyst converter provided in a general black smoke purification device.

In the case that the soot exfoliation piece larger than the sectional area of the cell 141c flows into the converter, since the touching area of the soot exfoliation piece with the upstream opening of the cell 141c is small, whereby such a large soot exfoliation piece is easy to flow into the cell 141c by the exhaust pressure of the engine or the like. Accordingly, even if a thing larger than the soot exfoliation piece supposed previously flows into the converter, the upstream opening of the cell 141c is not blocked.

The exhaust gas 10 including the soot exfoliation piece flowing into the cell 141c as mentioned above is purified as processes (1) to (4) shown below. (1) The soot touches the oxidation catalyst supported on the inner wall surface 143 of the cell 141c so as to be oxidized and finely divided. (2) At the time of flowing from the cell 141c to the cell 141b, the soot collides with the alternate part 145 so as to be crushed, and then flows into the cell 141b and touches the oxidation catalyst supported in the cell 141b so as to be oxidized and finely divided. (3) At the time of flowing from the cell 141b to the cell 141a, the soot collides with the alternate part 144 so as to be crushed, and then flows into the cell 141a and touches the oxidation catalyst supported in the cell 141a so as to be oxidized and finely divided. (4) The soot is discharged from the outlet of the cell 141 (the downstream opening of the cell 141a) and is collected by the DPF 150.

As mentioned above, with regard to the oxide catalyst converter 140, the soot exfoliation piece can be crushed goodly by flowing into the cell 141. Accordingly, the increase of exhaust pressure of the engine caused by the blocking of the cell 141 by the soot exfoliation piece is prevented. Then, the worsening of the exhaust efficiency of the engine which worsens fuel efficiency is prevented, and the engine performance is maintained goodly.
The cell 141 is not blocked by the soot exfoliation piece so as to avoid the block situation of the oxide catalyst converter 140, whereby the block situation of the oxide catalyst converter 140 caused by the soot exfoliation piece is prevented from being mistaken for the block situation of the DPF 150. Therefore, the block situation of the DPF 150 can be judged certainly.
As mentioned above, the PM flowing into the cell 141 is finely divided as moving toward the outlet of the cell 141. However, the sectional area of the outlet of the cell 141 is set smaller than the sectional area of the inlet of the cell 141 and the sectional area of the passage at the downstream side is set smaller than that at the upstream side, whereby the touching of the finely divided PM with the oxidation catalyst on the inner wall surface 143 is secured.

The black smoke purification device 100 has two stages of the oxide catalyst converter 140 and the DPF 150. However, the black smoke purification device may alternatively have only one stage of the oxide catalyst converter.
The oxide catalyst converter 140 has three stages of the main body part 140a, the first part 140b and the second part 140c. However, the oxide catalyst converter 140 may alternatively have two stages omitting the second part 140c or multistage that similar oxide catalyst is added before the second part 140c.
The opening area of each of the cells 141b and 142c arranged at the upstream side is about four times of that of the cell 141a arranged at the downstream side. However, the opening area is not limited thereto and may be changed suitably in consideration of supposed size, amount and the like of the soot exfoliation piece.
The sectional area of the cell 141b is substantially the same as that of the cell 141c. However, the sectional area is not limited thereto and the sectional area of the cell 141c may be larger than that of the cell 141b. The sectional area of the cell arranged at the upstream side only has to be not smaller than that of the cell arranged at the downstream side.

### [Second Embodiment]

Explanation will be given on an oxide catalyst converter 240 which is a second embodiment of the oxide catalyst converter according to the present invention.

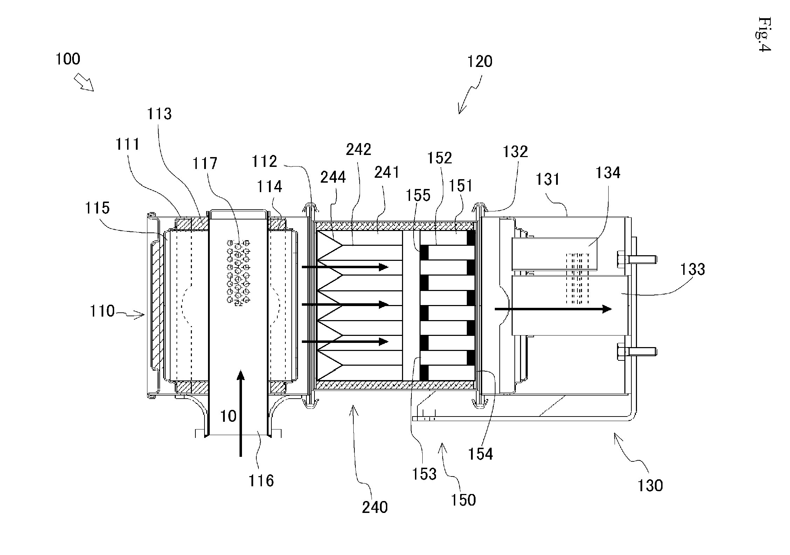

As shown in Fig. 4, the black smoke purification device 100 has the oxide catalyst converter 240.

### [Oxide Catalyst Converter 240]

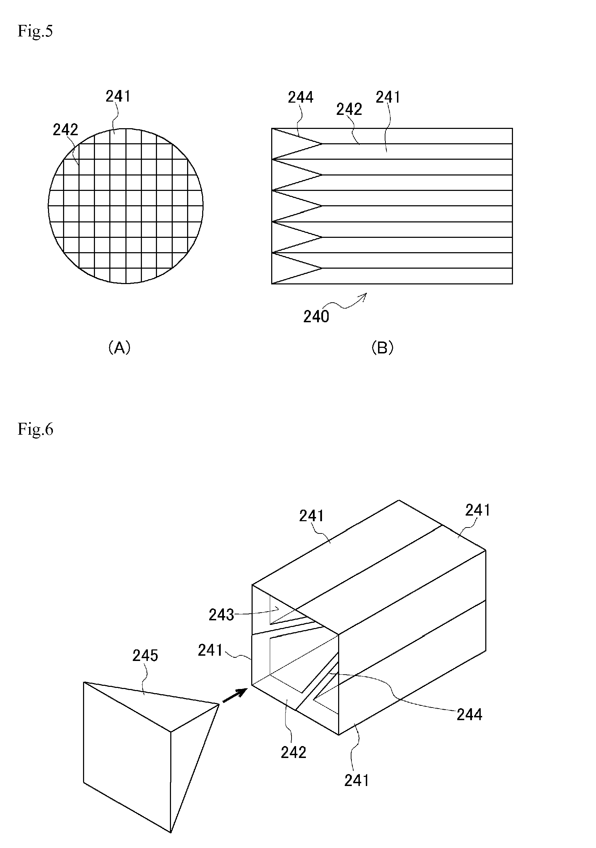

As shown in Figs. 5 and 6, the oxide catalyst converter 240 has an aggregate of cells 241. Each of the cells 241 is square tubular member whose lengthwise is along the flow direction of the exhaust gas 10. At the upper, lower, left and right sides of each of the cells 141b, the four adj acent cells 241 are arranged.

An oxidation catalyst is supported on an inner wall surface 243 of each of the cells 241. A notch 244 is formed at an upstream end of a partition 242 forming the side end part of the upstream opening of the cell 241.

A plurality of the cells 241 (in this embodiment, four cells 241) is regarded as a group of the cells and the part of the upstream end of the partition 242 which partitions the group into the cells 241 is recessed toward the downstream side so as to form the notch 244.
Accordingly, the part of the upstream end of the partition 242 which is the outer frame of the group of the cells is projected toward the upstream side from the part partitioning the group into the cells 241 so as to form one inlet. In other words, the inlets of the four cells 241 are united so as to form the one inlet.
The opening of the notch 244 formed as mentioned above is set larger than the soot exfoliation piece which is enlarged PM.

The inlet of the group of the four cells 241 formed by the notch 244 is quadrangular pyramid-like shaped, and is engaged with a quadrangular pyramid-like shaped member 245 as shown in Fig. 6.
The quadrangular pyramid-like shaped member 245 is pressed so as to be engaged with the inlet of the group of the cells while the apex of the quadrangular pyramid is projected toward the downstream side so as to form the notch 244.

As mentioned above, with regard to the oxide catalyst converter 240, the inlets of the four cells 241 are united into the one inlet by the notch 244 so that the opening area of the united inlet is four times larger than the one cell 241.
The inlet opening area of the group of the cells formed by the four cells 241 is set larger than the supposed outline of the soot exfoliation piece so that the soot exfoliation piece flows into the cells 241. Namely, the opening area of the notch 244 forming the opening of the cell 241 arranged at the inlet side of the oxide catalyst converter 240 is set enough large to for the PM which is enlarged to become the soot exfoliation piece to pass therethrough and is set larger than an inlet opening area of an oxide catalyst converter provided in a conventional black smoke purification device.

When the soot exfoliation piece larger than the opening area of the notch 244 flows thereinto, the touching area of the soot exfoliation piece and the notch 244 is small so that such a large soot exfoliation piece is easy to flow into the cell 241 by the exhaust pressure of the engine. Accordingly, even if a thing larger than the soot exfoliation piece supposed previously flows into the converter, the upstream opening of the notch 244 is not blocked.

The exhaust gas 10 including the soot exfoliation piece flowing into the cell 241 through the notch 244 as mentioned above is purified as mentioned below.
The soot touches the end surface of the partition 242 which partitions the four cells 241 and in which the notch 244 is formed so as to be crushed, and then touches the oxidation catalyst supported on the wall surface 243 of the cell 241 so as to be oxidized and finely divided. On the other hand, matters such as SOF and soot included in the exhaust gas 10 touch the oxidation catalyst supported on the wall surface 243 of the cell 241 so as to be oxidized and finely divided. Then, the PM after oxidized and finely divided is discharged from the outlet of the cell 241 and collected by the DPF 150.

As mentioned above, the soot exfoliation piece reaching the inlet of the oxide catalyst converter 240 can be crushed goodly. Accordingly, the increase of exhaust pressure of the engine caused by the blocking of the cell 241 by the soot exfoliation piece is prevented. Then, the worsening of the exhaust efficiency of the engine which worsens fuel efficiency is prevented, and the engine performance is maintained goodly.
The cell 241 is not blocked by the soot exfoliation piece so as to avoid the block situation of the oxide catalyst converter 240, whereby the block situation of the oxide catalyst converter 240 caused by the soot exfoliation piece is prevented from being mistaken for the block situation of the DPF 150. Therefore, the block situation of the DPF 150 can be judged certainly.
The outlet opening area of the cell 241 is set smaller than the inlet opening area thereof so that the touching of the PM with the oxidation catalyst on the inner wall surface 243 is secured at the downstream side at which the oxidization and fine dividing have been progressed.
By additional processing such as notching of a conventional oxidation catalyst carrier, the notch 244 can be provided cheaply.

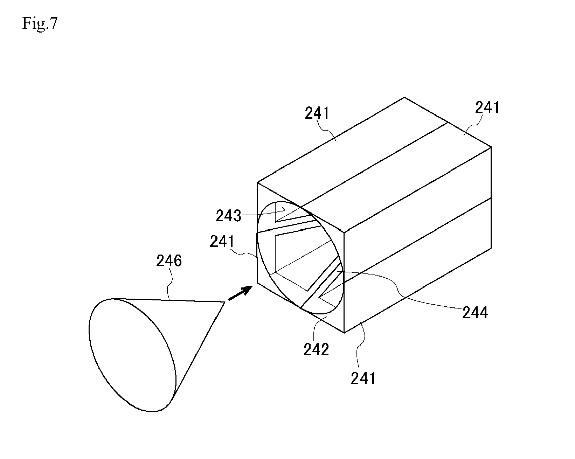

The black smoke purification device 100 has two stages of the oxide catalyst converter 240 and the DPF 150. However, the black smoke purification device 100 may alternatively have only one stage of the oxide catalyst converter.
The inlets of the four cells 241 are referred to as one group and the notch 244 is provided in each group. However, the number of the cells 241 included in the one group in which the notch 244 is provided is not limited and can be set suitably in consideration of the size, amount and the like of the soot exfoliation piece.
The opening size, depth and the like of the notch 244 also can be set suitably in consideration of the size and the like of the soot exfoliation piece.
The inlets of the cells 241 are formed by the notch 244 so as to be engaged with the quadrangular pyramid-like shaped member 245. However, the inlets are not limited thereto and may alternatively be engaged with a conical member 246 (see Fig. 7), a triangular pyramid-like shaped member or the like. The notch may alternatively be polygonal following the sectional shape of the cell.

### [Third Embodiment]

Explanation will be given on an oxide catalyst converter 340 which is a third embodiment of the oxide catalyst converter according to the present invention.

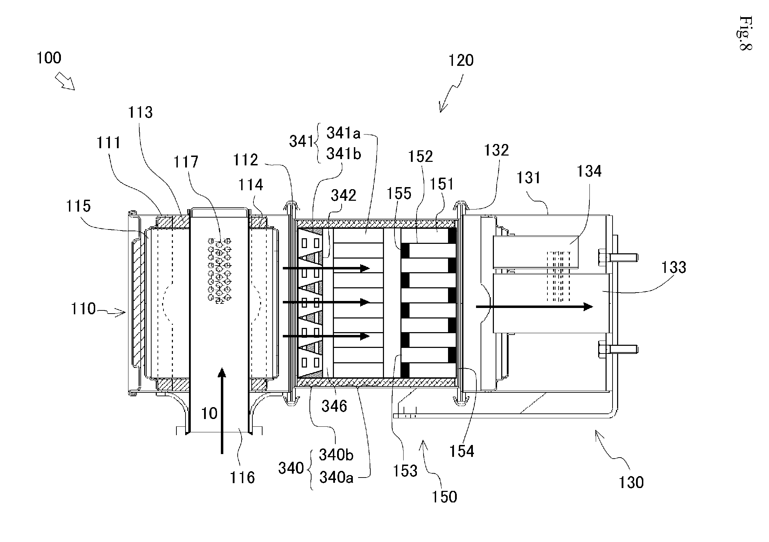

As shown in Fig. 8, the black smoke purification device 100 has the oxide catalyst converter 340.

### [Oxide Catalyst Converter 340]

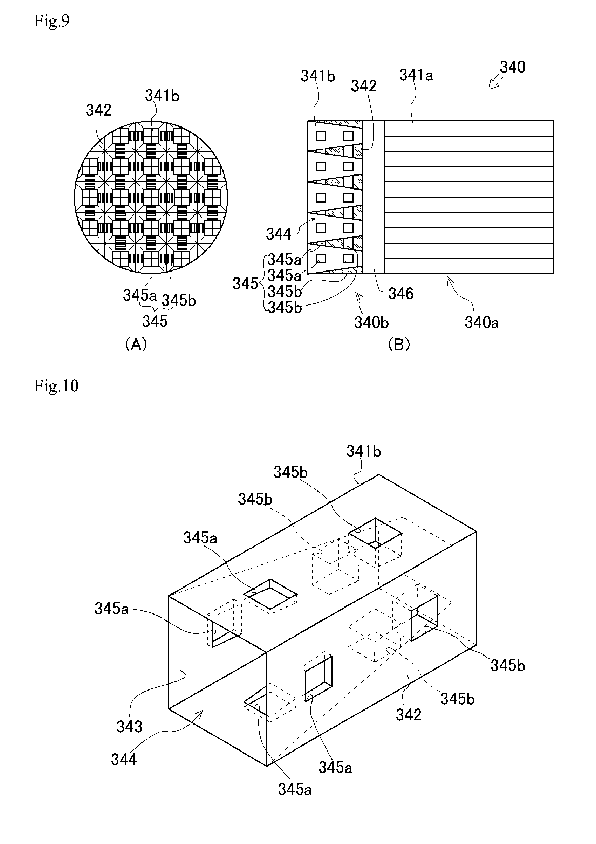

As shown in Figs. 9 and 10, the oxide catalyst converter 340 is constituted by a main body part 340a and a front part 340b. The front part 340b and the main body part 340a are arranged in this order along the flow direction of the exhaust gas 10 from the upstream side.

The oxide catalyst converter 340 has an aggregate of cells 341. The aggregate of the cells 341 is constituted by an aggregate of cells 341 a provided in the main body part 340a and an aggregate of cells 341b provided in the front part 340b.

The main body part 340a has the aggregate of the cells 341a. The main body part 340a is arranged at the downstream side, that is, the outlet side of the oxide catalyst converter 340. The opening area of each of the cells 341 a is set smaller than the opening area of each of the cells 341b of the front part 340b.
Each of the cells 341a is square tubular member whose lengthwise is along the flow direction of the exhaust gas 10. At the upper, lower, left and right sides of each of the cells 341a, the four adjacent cells 341a are arranged.

The front part 340b has the aggregate of the cells 341b. The front part 340b is arranged at the upstream side of the main body part 340a. The opening area of each of the cells 341b is set larger than the opening area of each of the cells 340a. The upstream opening area of each of the cells 341b of the front part 340b is about four times larger than the cell 341 a of the main body part 340a
Each of the cells 341b is square tubular member whose lengthwise is along the flow direction of the exhaust gas 10. At the upper, lower, left and right sides of each of the cells 341b, the four adjacent cells 341b are arranged.

An exhaust gas passage 344 which is a space in each of the cells 341b of the front part 340b is tapered from the upstream side to the downstream side so that the passage becomes narrow toward the downstream side. The upstream opening area of the cell 341b is set larger than the soot exfoliation piece which is an example of the enlarged PM.
Each of the cells 341b of the front part 340b is stacked with the aggregate of the four cells 341 a of the main body part 340a in which the four adjacent cells 341 a are arranged at the upper, lower, left and right sides of each of the cells 341 a.
The sectional shape of the exhaust gas passage 344 is square when viewed along the direction perpendicular to the flow direction of the exhaust gas 10.

An oxidation catalyst is supported on an inner wall surface 343 of each of the cells 341 a and 341b.

A plurality of communication holes 345, which communicate the exhaust gas passage 344 of one of the cells 341 a with the exhaust gas passage 344 of another cell 341 a, are formed in four partitions 342 at the upper, lower, left and right sides of the front part 340b.
Each of the communication holes 345 is constituted by a first communication hole 345a at the upstream side and a second communication hole 345b at the downstream side about the first communication hole 345a. The first communication hole 345a and the second communication hole 345b are extended perpendicularly to the flow direction of the exhaust gas 10 and connected to the exhaust gas passages 344 of the four cells 341b adjacent at the upper, lower, left and right sides. The sectional shape of each of the first communication hole 345a and the second communication hole 345b is square. However, the sectional shape is not limited thereto and may alternatively be circular or the like.

A space part 346 in which any cell does not exist is provided between the front part 340b and the main body part 340a of the oxide catalyst converter 340. The front part 340b and the main body part 340a are communicated with each other through the space part 346.

As mentioned above, with regard to the oxide catalyst converter 340, the upstream opening area of each of the cells 341b arranged at the upstream side is set larger than the supposed outline of the soot exfoliation piece so that the soot exfoliation piece flows into the cells 341b. Namely, the opening area of each of the cells 341b arranged at the inlet side of the oxide catalyst converter 340 is set enough large to for the PM which is enlarged to become the soot exfoliation piece to pass therethrough and is set larger than an inlet opening area of an oxide catalyst converter provided in a conventional black smoke purification device.

In the case that the soot exfoliation piece larger than the upstream opening area of the cell 341b flows into the converter, since the touching area of the soot exfoliation piece with the upstream opening of the cell 341b is small, whereby such a large soot exfoliation piece is easy to flow into the cell 341b by the exhaust pressure of the engine or the like. Accordingly, even if a thing larger than the soot exfoliation piece supposed previously flows into the converter, the upstream opening of the cell 341b is not blocked.

The exhaust gas 10 flowing into one of the exhaust gas passages 344 can flow into another exhaust gas passage 344 through the first communication hole 345a and the second communication hole 345b. Accordingly, the flow of the exhaust gas 10 is dispersed by the first communication hole 345a and the second communication hole 345b so as to be prevented from flowing certain one of the exhaust gas passages 344 concentratedly. Then, the exhaust gas 10 flows uniformly from the front part 340b to the main body part 340a and touches the oxide catalyst of the main body part 340a in each of the cells 341a, whereby the area in which the oxide catalyst of the main body part 340a works effectively is secured efficiently.

The space part 346 is provided between the front part 340b and the main body part 340a so that the exhaust gas 10 discharged from the front part 340b is spread once in the space part 346 and then supplied to each of the cells 341a of the main body part 340a uniformly. Accordingly, the exhaust gas 10 touches the oxide catalyst of the main body part 340a in each of the cells 341a, whereby the area in which the oxide catalyst of the main body part 340a works effectively is secured efficiently.

The exhaust gas 10 including the soot exfoliation piece flowing into the cell 341b as mentioned above is purified as mentioned below.
The soot exfoliation piece flows into the cell 341b and touches the oxidation catalyst supported on the wall surface 343 of the cell 341b so as to be oxidized and finely divided. On the other hand, matters such as SOF and soot included in the exhaust gas 10 touch the oxidation catalyst supported on the wall surface 343 of each of the cells 341 a and 341b so as to be oxidized and finely divided. Then, the PM after oxidized and finely divided is discharged from the outlet of the cell 341 a and collected by the DPF 150.

As mentioned above, the soot exfoliation piece reaching the inlet of the oxide catalyst converter 340 can be crushed goodly. Accordingly, the increase of exhaust pressure of the engine caused by the blocking of the cells 341a and 341b by the soot exfoliation piece is prevented. Then, the worsening of the exhaust efficiency of the engine which worsens fuel efficiency is prevented, and the engine performance is maintained goodly.
Each of the cells 341 a and 341b is not blocked by the soot exfoliation piece so as to avoid the block situation of the oxide catalyst converter 340, whereby the block situation of the oxide catalyst converter 340 caused by the soot exfoliation piece is prevented from being mistaken for the block situation of the DPF 150. Therefore, the block situation of the DPF 150 can be judged certainly.
The outlet opening area of the cell 341a is set smaller than the inlet opening area the cell 341b so that the touching of the PM with the oxidation catalyst on the inner wall surface 343 is secured at the downstream side at which the oxidization and fine dividing have been progressed.

The black smoke purification device 100 has two stages of the oxide catalyst converter 140 and the DPF 150. However, the black smoke purification device 100 may alternatively have only one stage of the oxide catalyst converter.
The opening area of each of the cells 341b arranged at the upstream side is about four times of that of the cell 341a arranged at the downstream side. However, the opening area is not limited thereto and may be changed suitably in consideration of supposed size, amount and the like of the soot exfoliation piece.
Each of the communication holes 345 is constituted by two stages of the first communication hole 345a at the upstream side and the second communication hole 345b at the downstream side. However, the communication hole 345 may alternatively be constructed by one stage, three stages or the like.
When enough dispersion can be obtained by changing the size or position of the first communication hole 345a and the second communication hole 345b, the space part 346 may be omitted.

### Industrial Applicability

The present invention is adoptable to a black smoke purification device which purifies PM discharged from an engine.

## Claims

1. A black smoke purification device comprising an oxide catalyst converter having aggregate of cells each of which has an oxide catalyst supported on a wall surface of the cell, wherein PM discharged from an engine is purified by the oxide catalyst, **characterized in that:**
inlet opening area of each of the cells is set large enough for the PM which is discharged from the engine and enlarged to pass therethrough, and is set larger than outlet opening area of the cell.

2. The black smoke purification device as set forth in claim 1, wherein
the oxide catalyst converter has a main body part, a first part provided at an upstream side of the main body part and having cells with larger upstream opening area than cells of the main body part, and a second part provided at an upstream side of the first part and having cells with larger upstream opening area than the cells of the main body part, and
the cells of the first part and the second part are arranged alternately.

3. The black smoke purification device as set forth in claim 1, wherein a notch is provided on side ends of upstream opening parts of a plurality of the cells so as to form one upstream opening by the cells as a group.

4. The black smoke purification device as set forth in claim 3, wherein the upstream opening part formed by the notch is quadrangular pyramid-like shaped.

5. The black smoke purification device as set forth in claim 3, wherein the upstream opening part formed by the notch is conical shaped.

6. The black smoke purification device as set forth in claim 1, wherein
the oxide catalyst converter has a main body part and a front part provided at an upstream side of the main body part,
an exhaust gas passage which is a space in each of cells of the front part is tapered from an upstream side to a downstream side, and
upstream opening area of each of the cells of the front part is larger than upstream opening area of each of cells of the main body part.

7. The black smoke purification device as set forth in claim 6, wherein sectional shape of the exhaust gas passage is square when viewed along a direction perpendicular to flow direction of exhaust gas in the exhaust gas passage.

8. The black smoke purification device as set forth in claim 6 or 7, wherein a communication hole communicating the exhaust gas passage of one of the cells with the exhaust gas passage of another cell is provided in the front part.

9. The black smoke purification device as set forth in one of claims 6 to 8, wherein a space part is provided between the main body part and the front part.
